# EUROPÄISCHE PATENTSCHRIFT

(11) **EP 2 317 181 B1**
(45) Veröffentlichungstag und Bekanntmachung des Hinweises auf die Patenterteilung: **04.07.2012**
(21) Anmeldenummer: 10177754.8
(22) Anmeldetag: 21.09.2010
(51) Int. Cl.: F16H 57/04

(54) **Schmiervorrichtung für Getriebe**
Lubricating device for gearbox
Dispositif de lubrification pour boîte de vitesses

(30) Priorität: 28.10.2009 DE 102009051003
(43) Veröffentlichungstag der Anmeldung: 04.05.2011
(73) Patentinhaber: Schaeffler Technologies AG & Co. KG, 91074 Herzogenaurach (DE)
(72) Erfinder: Smetana, Tomas, 91074, Herzogenaurach (DE)

(56) Entgegenhaltungen:
- EP-A1- 1 785 646
- EP-A2- 0 738 843
- DE-C- 944 037
- US-A- 3 364 776
- US-A- 4 964 489

## Beschreibung

### Gebiet der Erfindung

Die Erfindung betrifft ein Getriebe mit einer Schmiervorrichtung, mit zumindest einer um eine Drehachse umlaufenden Tauchscheibe, die in einen mit Schmieröl befüllten Ölsumpf der Schmiervorrichtung eintaucht und mit der bei Rotation um die Drehachse Schmieröl verteilbar ist.

### Hintergrund der Erfindung

Eine derartige Schmiervorrichtung ist in DE1 989 640U und durch einen Ölsumpf und eine in den Ölsumpf tauchende Tauchscheibe gebildet. Weiterhin weist die Schmiervorrichtung eine Abstreifvorrichtung auf, die das von der drehenden Tauchscheibe mitgenommene Schmieröls von der Scheibe teilweise abnimmt. Die Schmiervorrichtung weist darüber hinaus ein der Abstreifvorrichtung angeschlossenes Steigrohr und eine Ölsammelrinne auf. Von der Ölsammelrinne gehen Ölkanäle zu mehreren Lagerstellen. Der Vorteil von Stauscheiben liegt darin, dass diese dauerhaft mit einem Abschnitt in den Ölsumpf eingetaucht sind und Planschverluste wie beispielsweise durch ständig eintauchende Schöpfelemente nicht entstehen. Dadurch wird das Schmieröl auch nicht schaumig.

US 4,964,489 zeigt ein gattungsgemäßes Getriebe mit einer Schmiervorrichtung. Die Schmiervorrichtung weist eine um eine Drehachse umlaufende Tauchscheibe auf, die in einen mit Schmieröls befüllten Ölsumpf des Getriebes eintaucht. Die Tauchscheibe ist drehbar an einer Welle befestigt und weist in Richtung der Fliehkraft eine Staurinne auf. Die Staurinne ist durch wenigstens einen radial außen liegenden Rinnengrund und durch wenigstens eine von dem Rinnengrund radial nach innen orientierte Seitenwand mit Rand begrenzt, welcher radial zur Drehachse gerichtet um diese verläuft. Austrittstiffnungen der Staurinne sind radial weiter von der Drehachse weg ausgebildet als der Rand. Ein Teil der Staurinne taucht bei Rotation der Welle mit dem Rand in den Ölsumpf ein und schöpft Schmieröl, welches bei Rotation um die Drehachse durch die Austrittsöffnungen austritt und auf eine Prallfläche eines Prallblechs an einer Lagerstelle trifft, von dort abprallt und in die Lagerstelle des Getriebes verteilt wird.

DE 944 037C zeigt ein Ausgleichsgetriebe mit einer Schmiervorrichtung zur Schmierung einer Lagerstelle eines Planetentriebs. Die Schmiervorrichtung weist einen um eine Drehachse umlaufenden Planetenträger auf, in dem eine Staurinne ausgebildet ist. Mit der Staurinne taucht der Planetenträger bei Rotation in einen mit Schmieröl befüllten Ölsumpf des Ausgleichsgetriebes ein. Die Staurinne ist durch wenigstens einen radial außen liegenden Rinnengrund und durch wenigstens eine von dem Rinnengrund radial nach innen orientierte Seitenwand mit Rand begrenzt. Austrittsöffnungen der Staurinne sind radial weiter von der Drehachse weg ausgebildet als der Rand. Ein Teil der Staurinne taucht bei Rotation der Welle mit dem Rand in den Ölsumpf ein und schöpft Schmieröl, welches bei Rotation um die Drehachse durch die Austrittsöffnungen in kanalförmige Ölleitbahnen gelenkt und zu einer Lagerstelle eines Planetenrads geleitet wird.

EP 0 738 843A2 zeigt ein Planetengetriebe mit einer Schmiervorrichtung zur Schmierung der Lagerstellen der Planetenräder und eines Axiallagers. Die Schmiervorrichtung ist mit einem um eine Drehachse umlaufenden Planetenträger des Planetengetriebes verbunden und durch eine Staurinne mit Leitblech gebildet. An der Staurinne fängt sich bei Rotation des Planetenträgers das durch den Planetenträger aus einem Ölsumpf mitgerissene Schmieröl und wird über Ölleitbahnen in Richtung der Lagerstelle mit dem Axiallager geleitet. Von dem Leitblech aus wird das Schmieröl zu den Lagerstellen der Planeten geleitet.

### Beschreibung der Erfindung

Die Aufgabe der Erfindung ist es, eine Schmiervorrichtung zu schaffen, mit der Schmieröl effektiv verteilt wird und Verluste, insbesondere Planschverluste vermieden oder so gering wie möglich gehalten werden können.

Diese Aufgabe ist mit dem Gegenstand des Anspruchs 1 gelöst.

Die Erfindung sieht vor, dass wenigstens ein Gehäuseabschnitt des Getriebes mit einer Prallfläche versehen ist. Wenigstens eine der Austrittsöffnungen ist so ausgerichtet, dass der Strahl oder die Tropfen aus der Austrittsöffnung auf die Austrittsfläche trifft. Von der Prallfläche, die auch als Kante ausgebildet sein kann, tropft das Schmieröl entweder ab oder wird, wie eine Ausgestaltung der Erdindung vorsieht, weg geleitet. Dazu können an der Prallfläche Ölleitbahnen ausgebildet sein. Alternativ schließen die Ölleitbahnen sich der Prallfläche an. Der Begriff Ölleitbahnen schließt Sammelrillen oder ähnliche Sammel- bzw. Auffangeinrichtungen mit ein. Ölleitbahnen sind auch in Ölkanälen ausgebildet und sind bevorzugt Rippen an einer Getriebewand oder an einem Gehäuseabschnitt des Getriebes. Die Erfindung sieht vor, dass die Ölleitbahnen von der Prallfläche zu wenigstens einer Lagerstelle des Getriebes führen. Die Lagerstellen weisen ein oder mehrere als Gleit- oder Wälzlager ausgebildete Lager auf, zu denen das Schmieröl geleitet wird. Der oder die Ölverteiler können Bestandteil eines Getriebebauteils, beispielsweise eines Planetenträgers sein oder sind als Einzelteil an diesem befestigt. Alternativ sind die Ölverteiler an einer gesonderten Scheibe angeordnet, die separat auf einer rotierenden Welle sitzt, oder sind an einem Zahnrad oder Planetenträger des Getriebes befestigt.

Die Schmiervorrichtung versorgt erfindungsgemäß eine Lagerstelle mit Öl, in der der Rotor des Elektromotor drehbar gelagert ist und ist deshalb vorzugsweise in einer Elektromotor-Getriebeeinheit angeordnet. Die Schmiervorrichtung ist vorzugsweise in einem Planetengetriebe, beispielsweise in dem eines elektromotorischen Differenzial eingesetzt.

Derartige Schmiervorrichtungen sind in allen denkbaren Variationen in der Industrie und im Fahrzeugbau, vorzugsweise in Planetentrieben von Elektroachsen, Automatikgetrieben und Stationären Aggregaten mit E-Motor und Getriebe sowie in Windkraftanlagen einsetzbar. Durch eine derartige Schmiervorrichtung können verlustarm gezielt Lagerstellen mit Schmieröl versorgt und gekühlt werden. Es kann auf den Einsatz von Druckölbeschmierung verzichtet werden.

Die Schmiervorrichtung ist für beliebige Getriebe des Maschinen- oder Fahrzeugbaus, insbesondere für den Einsatz in Fahrzeuggetrieben vorgesehen. In dem Getriebe ist zumindest eine um eine Drehachse umlaufende Tauchscheibe angeordnet.

Die Tauchscheibe ist entweder separat ausgebildet und an einer rotierenden Welle des Getriebes angeordnet, oder ist an einem rotierenden Getriebebauteil befestigt. Rotierende Getriebeelemente, an denen die Tauchscheibe(n) befestigt ist/sind können beispielsweise ein Planetenträger eines Planetengetriebes, Trommeln von Lamellenkupplungen in Verteilergetrieben, Differenzialen und Automatikgetrieben oder können Schaltwalzen sein. Die Drehachse ist die jeweilige Rotationsachse der Welle bzw. des Getriebeelements, um die die Tauchscheiben rotieren. Die Tauchscheiben sind aus Kunststoff oder aus Metall und aus einer oder mehreren Werkstoffkomponenten ausgebildet.

Die Schmiervorrichtung weist einen Ölsumpf auf, in den die Tauchscheibe teilweise eintaucht. Bei Rotation der Getriebewelle und/oder des Getriebebauteils um die Drehachse wird durch die Tauchscheibe aus dem Ölsumpf Öl mitgenommen und aufgrund von Fliehkraft an den Rand der Tauchscheibe befördert.

Die Tauchscheibe weist wenigstens eine Staurinne auf, die das durch Fliehkraft bewegte Schmieröl staut. Die Staurinne ist durch wenigstens einen radial außen liegenden Rinnengrund und durch eine von dem Rinnengrund radial nach innen orientierte Seitenwand mit Rand begrenzt. In der Staurinne wird das mit der Tauchscheibe mitgenommene und das mit der Staurinne geschöpfte Schmieröl gestaut. Die Staurinne ist beispielsweise U-förmig, V-förmig oder beliebig anders ausgebildet und verläuft vorzugsweise auf einer Kreisbahn oder polygonförmig um ein Rotationszentrum, das von der Drehachse senkrecht durchstoßen ist. Die Ränder der Seitenwände der Staurinne sind radial näher an der Drehachse als Rinnengrund.

Derartige Staurinne sind als Einzelteil an der Tauchscheibe befestigt oder alternativ einteilig mit dieser ausgebildet. Weiterhin kann die Rinne auch nur eine Seitenwand aufweisen, die die Rinne zur einen Seite hin begrenzt. Zur anderen Seite ist die Rinne durch die Tauchscheibe selbst begrenzt, so dass die Rinne im Querschnitt gesehen hakenförmig ausgebildet ist und nur einen Rand aufweist, der radial näher an der Drehachse ist als deren Rinnengrund. Die Staurinne ist durchgehend als Rinne ausgebildet oder in umfangsseitig in Ölfangtaschen aufgeteilt. Die Staurinne ist vorzugsweise radial außen am Rand der Tauchscheibe ausgebildet.

Ein Teil der Staurinne taucht mit dem Teil der Tauchscheibe in den Ölsumpf ein. Dadurch ist der Teil der Staurinne, der mit der Tauchscheibe ins Schmieröl getaucht ist, immer bis zum Rand oder bis zu den Rändern mit Schmieröl befüllt. Wenn die Tauscheibe mit der Staurinne rotiert, werden durch die Abschnitte der Staurinne, die den Ölsumpf passieren, Anteile an Schmieröls aus dem Ölsumpf mitgenommen und ins Getriebe gefördert. Diese Anteile werden durch die Massenträgheit in Verbindung mit Adhäsionswirkungen und durch Auswirkungen der Fliehkraft mitgenommen.

Die Staurinne weist Austrittsöffnungen auf. Die die Austrittsöffnungen sind Durchgangslöcher oder Schlitze mit gleichmäßigem oder veränderlichem Querschnitt und sind radial weiter von der Drehachse weg angeordnet als der Rand an der Seitenwand bzw. die Ränder an den Seitenwänden. Diese Austrittsöffnungen sind vorzugsweise am Rinnengrund der Staurinne oder beispielsweise in den Seitenwänden bzw. in der Stauscheibe ausgebildet.

Mit einer Ausgestaltung der Erfindung ist vorgesehen, dass in der Staurinne Vertiefungen ausgebildet sind, an deren Grund zumindest jeweils eine Austrittsöffnung ausgebildet ist. Das Fassungsvermögen, also das mit Schmieröl befüllbare Volumen, der vorzugsweise wannen-, schalen- oder taschenförmig ausgebildeten Vertiefungen ist mit weiterem befüllbaren Volumen der Staurinne verbunden. In diesem Fall sind die Vertiefungen am Grund der Staurinne ausgebildet. Alternativ dazu unterteilen die Vertiefungen die Staurinne umfangsseitig in aufeinander folgende Taschen, die bis zum Rand bzw. die bis zu den Rändern gehen. Durch eine derartige Ausbildung der Tauchscheibe ist das Fördervolumen der Tauchscheiben erhöht, da in diesem Fall der Anteil des durch die Tauchscheibe mitgenommenen Schmieröls nach dem Verlassen des Ölsumpfes zunächst zumindest dem Fassungsvermögen der Vertiefungen bzw. der Taschen entspricht.

Es ist weiterhin vorgesehen, dass zumindest die Vertiefungen ein Schmierölvolumen aufweisen, das bei einer vorbestimmten Drehzahl um die Drehachse pro Umlauf um die Drehachse einmal befüllbar und während des gleichen Umlaufs über wenigstens eine Austrittsöffnung einmal entleerbar ist. Anders ausgedrückt, die Vertiefungen bzw. Taschen weisen ein Volumen für verteilbares Schmieröl auf, das pro Umdrehung mit wenigstens einer definierten Drehzahl um die Drehachse einmal befüllbar und noch während der gleichen Umdrehung einmal über die Austrittsöffnung entleerbar ist.

Demnach sind das Fassungsvermögen an Schmieröl und der Durchlassquerschnitt der Austrittsöffnung so ausgelegt, dass diese geeignet sind, während einer vom Anwender gezielt gewählten Drehzahl mit einer Befüllung soviel Schmieröl aufzunehmen, dass es zum Verteilen für eine Umdrehung ausreicht und bis zum Ende dieser Umdrehung wieder entleert ist. Mit Beginn der nächsten Umdrehung wiederholt sich der Vorgang usw..

Der Querschnitt der Austrittsöffnung ist von der auf das Schmieröl wirkenden Fliehkraft, von der Dichte bzw. Viskosität des Schmieröls, von der Temperatur und von der Menge des pro Umdrehung zu verteilenden Schmieröls abhängig.

Der Vorteil der Erfindung liegt darin, dass die Menge des verteilten Schmieröls und dessen Verteilung nicht mehr zufällig gestaltet ist, sondern optimal an bestimmte Betriebsbedingungen angepasst werden kann. Es wird durch das Tauchrad in den Vertiefungen bzw. Taschen pro Umdrehung nur soviel Schmieröls mitgenommen, wie dies für die Schmierung unter den extremen Bedingungen, beispielsweise bei hohen Drehzahlen tatsächlich notwendig ist. Fliehkräfte werden deshalb gering gehalten, weil keine überflüssigen Mengen an Schmieröl mitgeschleppt werden.

Die Vertiefungen bzw. Taschen weisen vorzugsweise das gleiche befüllbare Volumen auf und sind mit gleicher Teilung und gleichmäßigen radialen Abständen zur Drehachse angeordnet. Der Vorteil dieser Anordnung liegt darin, dass die Menge/das Volumen des zu verteilenden Schmieröls ohne einseitige Massenkräfte zu erzeugen erhöht werden kann, weil dieses auf mehrere Ölverteiler aufgeteilt wird, Außerdem kann damit gleichzeitig die Masse des pro Umdrehung zu verteilenden Schmieröls gleichmäßig am Umfang um die Drehachse verteilt werden,

Darüber hinaus sieht eine Ausgestaltung der Erfindung vor, dass jede der Taschen bzw. Vertiefungen bei der gleichen definierten Drehzahl einmal pro Umlauf entleerbar ist. Bei einer Tauchschmierung durchlaufen die Vertiefungen nacheinander den Ölsumpf und schöpfen nacheinander das Schmieröl und geben dieses nach dem Durchlaufen des Ölsumpfes bis zum wiederholten eintauchen in den Ölsumpf an die Umgebung ab, so dass eine kontinuierliche Ölverteilung abgesichert ist.

Es ist auch denkbar, dass in der Staurinne oder in einer anderen Staurinne, die an der gleichen Tauchscheibe oder einer anderen ausgebildet ist, mehrere Vertiefungen mit zueinander unterschiedlicher Verteilungscharakteristik angeordnet sind. Gruppen von Vertiefungen oder einzelne Vertiefungen sind dann beispielsweise hinsichtlich des befüllbaren Volumens und der Austrittsöffnungen an jeweils eine andere vorbestimmte Betriebsdrehzahl angepasst ausgelegt. In diesem Fall kann die Ölverteilung für mehrere Betriebszustände optimal gestaltet werden.

Eine weitere Ausgestaltung der Erfindung sieht vor, dass die Vertiefungen oder die Taschen mit mehr als einer Austrittsöffnung versehen sind. Die Austrittsöffnungen sind so ausgelegt, dass der zur Entleerung des Volumens pro Umlauf notwendige Volumenstrom gleichmäßig auf alle Austrittsöffnungen aufgeteilt ist. Alternativ sind die Querschnitte der Austrittsöffnungen unterschiedlich gestaltet, so dass durch diese bei einer Umdrehung unterschiedliche Mengen an Spritzöl austreten kann.

Zugleich oder alternativ zu den oben genannten Ausführungen sind die Vertiefungen oder die Austrittsöffnungen innerhalb in einer Staurinne oder die Austrittsöffnungen von Staurinne zu Staurinne mit unterschiedlichem radialem Abstand zur Drehachse angeordnet. Durch Lage und Auslegung sind die Volumenströme voreinstellbar und können unterschiedlichen Betriebszuständen angepasst werden.

Weiterhin ist eine Schmiervorrichtung in einem Planetengetriebe vorgesehen, die eine außerhalb des Ölsumpfes mit einem Planetenträger umlaufende Ölsammelrinne aufweist. Von der Ölsammelrille gehen Ölkanälen zu Schmierlöchem in Planetenbolzen.

Ein Verfahren zur Schmierung sieht vor, dass ein Schmierölstrom durch Drehen der teilweise in der Ölsumpf eingetauchten Tauchscheibe erzeugt wird, dass das Schmieröls in der Stauscheibe gestaut wird, dass durch Drehen der Tauchscheibe Fliehkräfte erzeugt werden, aufgrund derer tropfen- oder strahlförmiges Schmieröl durch die Autrittsöffnungen austritt und gegen eine Prallfläche geschleudert wird und dass das Schmieröl von der Staufläche zu wenigstens einer Lagerstelle geleitet wird. Überflüssiges Schmieröl wird im Ölsumpf wieder aufgenommen.

Die Lagerstelle ist beispielsweise eine Axiallagerung in dem Getriebe.

Die Schmiervorrichtung ist kostengünstig herstellbar. Die Schmierölversorgung mittels der erfindungsgemäßen Schmiervorrichtung ist insbesondere für die Nadellagerungen von Planeten vorteilhaft. Durch die erfindungsgemäße Gestaltung der Tauchscheibe ist deren Kontur nahezu glatt, so dass keine Planschverluste entstehen, wie diese üblicherweise durch Schaufeln oder Drallrillen entstehen. Die innere Kontur der Staurinne ist aufgrund der Vertiefungen wellig, so dass mehrere Öltaschen am Umfang der Tauchscheibe erzeugt werden.

### Kurze Beschreibung der Zeichnungen

Die Erfindung wird nachfolgend anhand eines Ausführungsbeispiels nähe beschrieben. Es zeigen.
- Figur 1: eine Hauptansicht einer Baugruppe eines Planetentriebs,
- Figur 2: eine Schnittdarstellung durch einen Planetentrieb entlang der Linie II-II nach Figur 1,
- Figur 2a: das Detail Z nach Figur 2 alternativ gestaltet,
- Figur 3: ein Detail X der Hauptansicht in einem Teilschnitt,
- Figur 4: eine Hauptansicht einer erfindungsgemäßen Tauchscheibe,
- Figur 5: eine Seitenansicht der erfindungsgemäßen Tauchscheibe nach Figur 5
- Figur 6: die erfindungsgemäße Tauchscheibe nach Figur 4 in einem Quer- schnitt entlang der Linie VI - VI nach Figur 5 und
- Figur 7: ein Detail einer Frontalansicht des Gehäuses, das einen Elektro- motor von dem Planetentrieb nach Figur 2 trennt.

### Detaillierte Beschreibung der Zeichnung

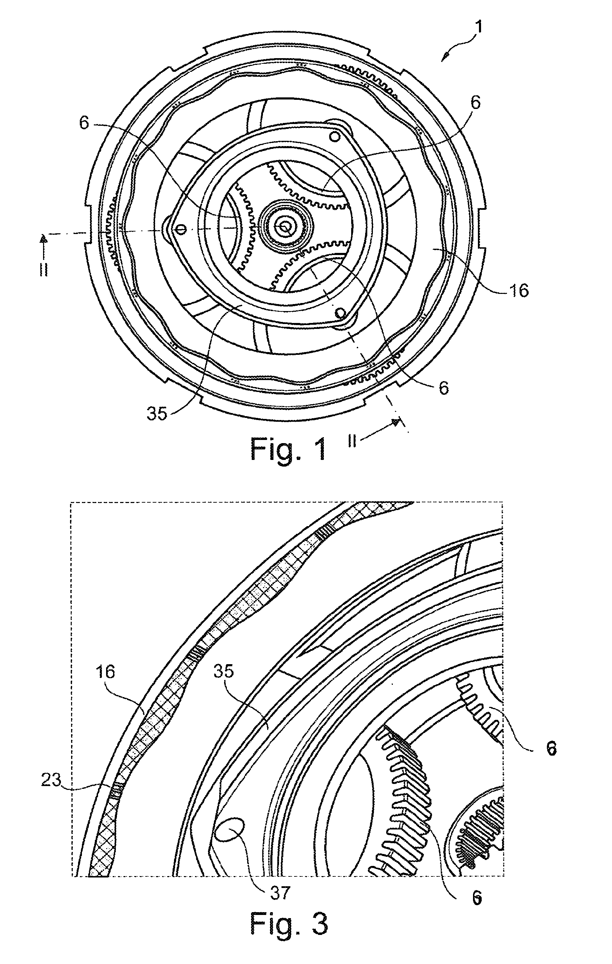

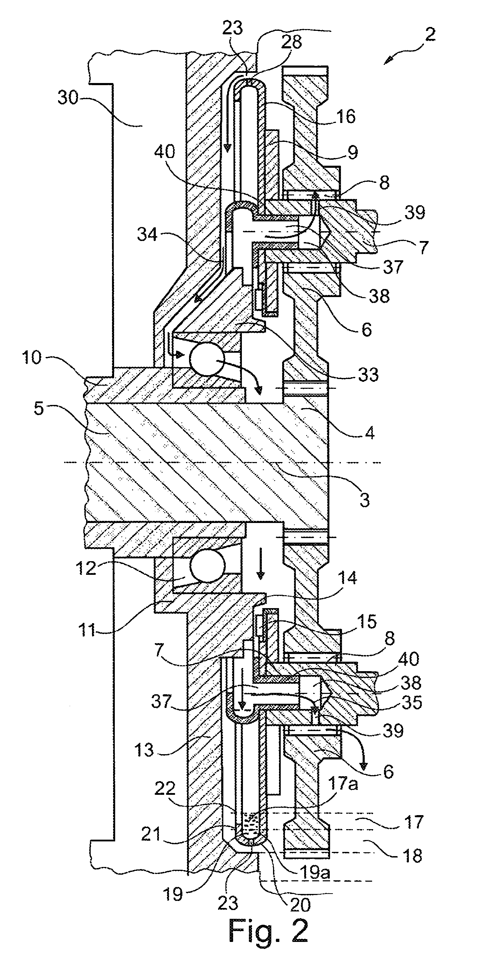

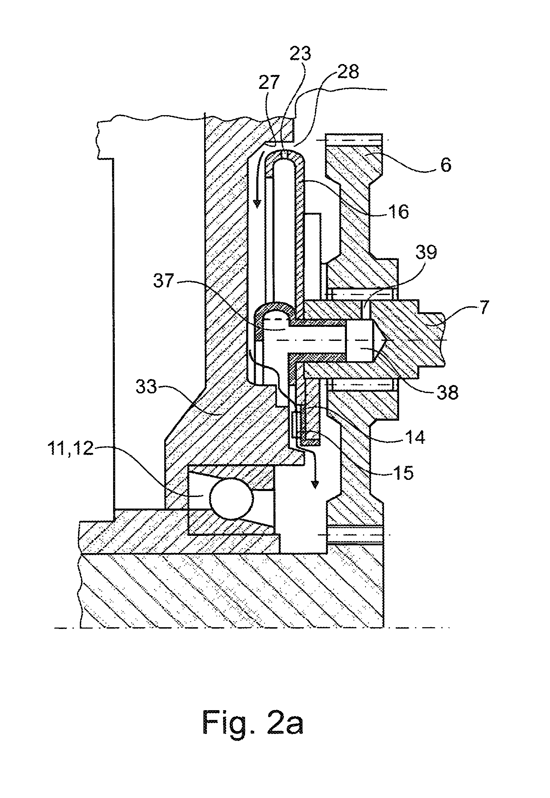

Figuren 1 und 2 - Figur 1 zeigt eine Baugruppe 1 eines Planetentriebs 2. Der Planetentrieb 2 ist in Figur 2 in einem Längsschnitt entlang der Drehachse 3 dargestellt. Die Baugruppe 1 ist ohne Sonnenrad 4 dargestellt. Der Planetentrieb 2 nach Figur 2 ist mit dem Sonnenrad 4 dargestellt. Das Sonnenrad 4 ist an einer Achse 5 ausgebildet. Die Achse 5 sitzt in einer Rotorwelle 10 eines nicht detailliert dargestellten Elektromotors 30. Die Rotorwelle 10 ist an einer Lagerstelle 11 mittels eines Wälzlagers 12 in Form eines Kugellagers in einem Abschnitt 13 eines nicht vollständig dargestellten Gehäuses gelagert. Der Abschnitt 13 trennt den Elektromotor von dem Planetentrieb 2.

Die Rotationsachse der Achse 5 ist die Drehachse 3. Das Sonnenrad 4 steht mit drei Planetenrädern 6 im Eingriff. Die Planetenräder 6 sind mit Nadellagern 8 auf Planetenbolzen 7 an einem Planetenträger 9 gelagert. Der Planetenträger 9 ist an einer Lagerstelle 14 mittels eines weiteren Wälzlagers 15 in Form eines Axialnadellagers axial an dem Abschnitt 13 des Gehäuses abgestützt.

Die Schmiervorrichtung weist eine um die Drehachse 3 umlaufenden Tauchscheibe 16 auf. Die Tauchscheibe 16 taucht in einen mit Schmieröl 17 befüllten Ölsumpf 18 ein und weist radial außen eine Staurinne 19 auf. Die Staurinne 19 ist durch wenigstens einen radial außen liegenden Rinnengrund 20 und durch wenigstens eine von dem Rinnengrund 20 radial nach innen orientierte Seitenwand 21 mit Rand 22 begrenzt. Der Rand 22 ist radial zur Drehachse 3 gerichtet. Die Staurinne taucht mit dem Rand 22 in den Ölsumpf 18 ein, so dass eine Teilmenge 17a des Schmieröl 17 in den eingetauchten Teil 19a der Staurinne 19 geschöpft ist. Die Staurinne 19 weist Austrittsöffnungen 23 auf. Die Austrittsöffnungen 23 sind radial weiter von der Drehachse 3 weg angeordnet als der Rand 22.

Figuren 3, 4, 5 und 6 - In der Staurinne 19 sind Vertiefungen 24 ausgebildet, an deren Grund jeweils drei der Austrittsöffnung 23 ausgebildet ist. Die Vertiefungen 24 weisen ein Schmierölvolumen 26 auf, das bei einer vorbestimmten Drehzahl um die Drehachse 3 pro Umlauf einmal befüllbar und während des gleichen Umlaufs über wenigstens die drei Austrittsöffnungen 23 einmal entleerbar ist.

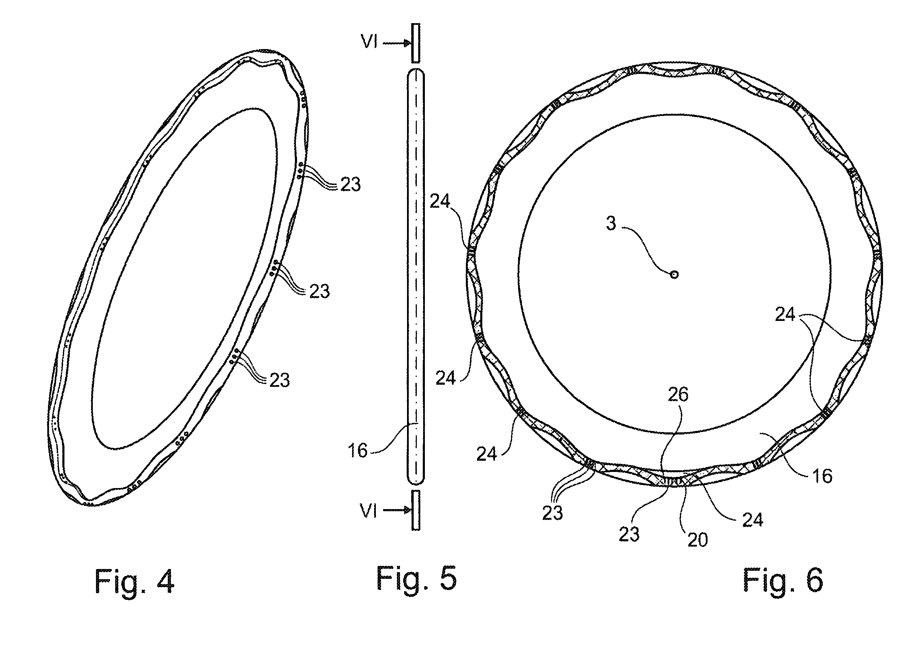

Wie insbesondere aus der Darstellung nach Figur 5 hervorgeht, ist die Tauchscheibe 16 außen glatt und verrundet gestaltet, so dass diese beim Durchlaufen des Ölsumpfes 18 das Schmieröl kaum verwirbelt und aufschäumt. Planschverluste sind deshalb nicht zu erwarten.

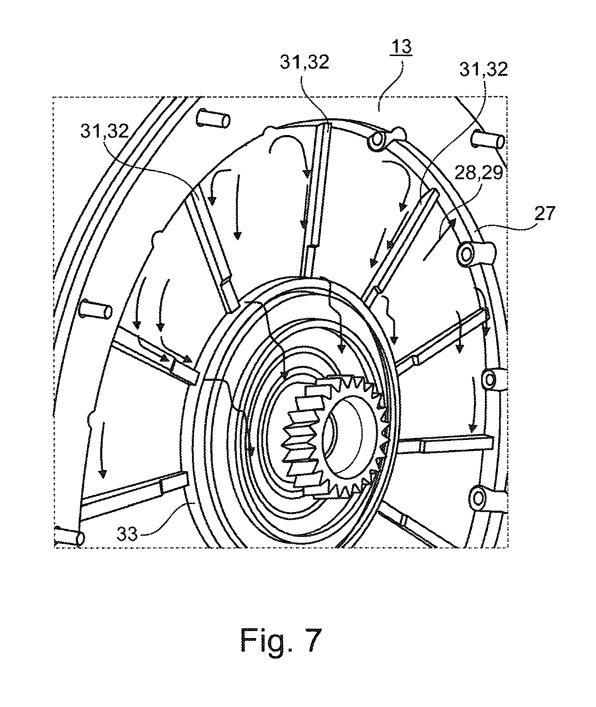

Figuren 2, 2a, 3 und 7 - Der Gehäuseabschnitt 13 des Getriebes (Figur 2) ist mit einer Prallfläche 27 versehen, auf die ein die Austrittsöffnungen 23 bei Rotation der Tauchscheibe 16 verlassender Ölstrahl 28 oder eine aus den Austrittsöffnung 23 herausgeschleuderte Menge Schmieröltropfen 29 gerichtet ist. Der Gehäuseabschnitt 13 trennt den Elektromotor 30 von dem Planetentrieb 2. Figur 7 zeigt den Gehäuseabschnitt 13 an dem die Prallfläche 27 und Ölleitbahnen 31 in Form von Rippen 32 ausgebildet sind. Die Ölleitbahnen 31 führen auf eine Nabe 33 zu, an der die Wälzlager 12 und 15 abgestützt sind.

Bei Betrieb der Schmiervorrichtung, also wenn sich die Tauchscheibe 16 um die Drehachse 3 dreht, wird ein mit den Pfeilen symbolisierter Schmierölstrom erzeugt, der aus dem Ölsumpf 18 geschöpftes Schmieröl über die Austrittsöffnungen 23 gegen die Prallfläche 27 verspritztes und von dort über die Ölleitbahnen 31 den Lagerstellen 11 und 14 zugeleitetes Schmieröl aufweist. Eine Teilmenge des Schmieröls wird beispielsweise über die Nabe 33 durch das Wälzlager 15 hindurch in den Ölsumpf 18 zurück geleitet (Figur 2a). Eine andere Teilmenge des Schmieröls wird beispielsweise in der Mulde 34 gesammelt und über Ölkanäle direkt zu dem Wälzlager 11 geleitet (Figur 2) mit dem die Rotorwelle 10 gelagert ist.

Ein weiterer Teil des Schmieröls wird von einer Sammelrinne 35 aufgefangen und in dieser durch die Rotation verteilt. Das Schmieröl wird über Ölkanäle 37 in Sacklochbohrungen 38 der Planetenbolzen 7 und über Querbohrungen 39 zu den Nadellagern 8 geleitet. Die Sammelrinne 35 ist aus Kunststoff und weist drei Befestigungsstutzen 40 auf, die innen hohl sind. Mit diesen Befestigungsstutzen 40 sind die Tauchscheibe 16 und die Sammelrinne 35 an dem Planetentrieb 2 befestigt, in dem jeder der Befestigungsstutzen 40 in eine der Sacklochbohrungen 38 gesteckt ist. Die Tauchscheibe 16 ist dabei zwischen der Sammelrinne 35 und dem Planetenträger 9 gehalten. Die Befestigungsstutzen 40 weisen innen die Ölkanäle 37 auf.

## Patentansprüche

1. Getriebe mit einer Schmiervorrichtung, mit zumindest einer um eine Drehachse (3) umlaufenden Tauchscheibe (16), die in einen mit Schmieröl (17) befüllten Ölsumpf (18) der Schmiervorrichtung eintaucht und mit der bei Rotation um die Drehachse (3) Schmieröl (17) verteilbar ist, wobei die Tauchscheibe (16) in Richtung der Fliehkraft wenigstens eine Staurinne (19) aufweist, wobei die Staurinne (19) durch wenigstens einen radial außen liegenden Rinnengrund (20) und durch wenigstens eine von dem Rinnengrund (20) radial nach innen orientierte Seitenwand (21) mit Rand (22) begrenzt ist und dabei der Rand (22) radial zur Drehachse (3) gerichtet um diese verläuft und wobei die Staurinne (19) Austrittsöffnungen (23) aufweist, und dabei die Austrittsöffnungen (23) radial weiter von der Drehachse (3) weg ausgebildet sind als der Rand (22) sowie ein Teil der Staurinne (19) mit dem Rand (22) in den Ölsumpf (18) eintaucht, wobei das Getriebe mit einer Prallfläche (27) versehen ist, von der Ölleitbahnen (31) zu wenigstens einer Lagerstelle (11, 14) des Getriebes weg führen und auf welche wenigstens ein durch eine der Austrittsöffnungen (23) erzeugbarer Ölstrahl (28) oder eine aus einer der Austrittsöffnungen (23) heraustretende Menge Schmieröltropfen (29) gerichtet ist, **dadurch gekennzeichnet dass** wenigstens ein Abschnitt (13) eines Gehäuses des Getriebes mit der Prallfläche (27) versehen ist, von der die Ölleitbahnen (31), zu wenigstens einer Lagerstelle (11) hin, weg führen, in welcher die Rotorwelle (10) eines Elektromotors (30) Lagerbar ist.

2. Getriebe nach Anspruch 1, **dadurch gekennzeichnet, dass** in der Staurinne (19) Vertiefungen (24) ausgebildet sind, an deren Grund zumindest jeweils eine Austrittsöffnung (23) ausgebildet ist.

3. Getriebe nach Anspruch 2, **dadurch gekennzeichnet, dass** zumindest die Vertiefungen (24) ein Schmierölvolumen aufweisen, das bei einer vorbestimmten Drehzahl um die Drehachse (3) pro Umlauf um die Drehachse (3) einmal befüllbar und während des gleichen Umlaufs über die wenigstens eine Austrittsöffnung (23) einmal entleerbar ist.

4. Getriebe nach Anspruch 1, **dadurch gekennzeichnet, dass** die Ölleitbahnen (31) durch Rippen (32) gebildet sind.

5. Getriebe nach Anspruch 1, **dadurch gekennzeichnet, dass** in der Schmiervorrichtung beim Drehen der Tauchscheibe (16) um die Drehachse (3) ein Schmierölstrom erzeugbar ist, der von dem Ölsumpf (18) ausgehendes mit der Tauchscheibe (16) geschöpftes Ober die Austrittsöffnungen (23) gegen die Prallfläche (27) verspritztes und von dort über die Ölleitbahnen (31) der wenigstens einen Lagerstelle (11, 14) zugeleitetes Schmieröl (17) aufweist.

6. Getriebe nach Anspruch 1, **dadurch gekennzeichnet, dass** wenigstens eine Lagerstelle (14), zu der die Ölleitbahnen von der Prallfläche weg führen, wenigstens ein Axiallager (15) des Getriebes aufweist.

7. Getriebe nach Anspruch 1 mit einem Planetengetriebe, **dadurch gekennzeichnet, dass** die Schmiervorrichtung eine außerhalb des Ölsumpfes (18) mit einem Planetenträger (9) umlaufende Ölsammelrinne (35) aufweist, von der Ölkanäle (37) zu Schmierbohrungen (38, 39) in Planetenbolzen (7) abgehen.

## Claims

1. Gearbox having a lubricating device, having at least one immersion disc (16), which immersion disc rotates about an axis of rotation (3) and dips into an oil sump (18), which is filled with lubricating oil (17), of the lubricating device and by means of which immersion disc, as it rotates about the axis of rotation (3), lubricating oil (17) can be distributed, wherein the immersion disc (16) has, in the direction of the centrifugal force, at least one accumulation channel (19), wherein the accumulation channel (19) is delimited by at least one channel base (20) situated radially at the outside and by at least one side wall (21) which is oriented radially inwardly from the channel base (20) and which has an edge (22), and here, the edge (22) runs around and so as to be directed radially with respect to the axis of rotation (3), and wherein the accumulation channel (19) has outlet openings (23), and here, the outlet openings (23) are formed radially further away from the axis of rotation (3) than the edge (22), and a part of the accumulation channel (19) dips with the edge (22) into the oil sump (18), wherein the gearbox is provided with an impingement surface (27), from which impingement surface oil guide tracks (31) lead to at least one bearing point (11, 14) of the gearbox, and towards which impingement surface is directed at least one oil jet (28) which can be generated by one of the outlet openings (23) or a quantity of lubricating oil droplets (29) emerging from one of the outlet openings (23), **characterized in that** at least one portion (13) of a housing of the gearbox is provided with the impingement surface (27) from which the oil guide paths (31) lead towards at least one bearing point (11) in which the rotor shaft (10) of an electric motor (30) can be mounted.

2. Gearbox according to Claim 1, **characterized in that** depressions (24) are formed in the accumulation channel (19), on the base of which depressions is formed at least in each case one outlet opening (23).

3. Gearbox according to Claim 2, **characterized in that** at least the depressions (24) have a lubricating oil volume which, at a predetermined rotational speed about the axis of rotation (3), can be filled once per revolution about the axis of rotation (3), and during the same revolution, evacuated once via the at least one outlet opening (23).

4. Gearbox according to Claim 1, **characterized in that** the oil guide tracks (31) are formed by ribs (32).

5. Gearbox according to Claim 1, **characterized in that**, in the lubricating device, during the rotation of the immersion disc (16) about the axis of rotation (3), a lubricating oil flow can be generated which has lubricating oil (17) which originates from the oil sump (18), is scooped up by the immersion disc (16), is sprayed via the outlet openings (23) against the impingement surface (27), and is conducted from there via the oil guide tracks (31) to the at least one bearing point (11, 14).

6. Gearbox according to Claim 1, **characterized in that** at least one bearing point (14) to which the oil guide tracks lead from the impingement surface has at least one axial bearing (15) of the gearbox.

7. Gearbox according to Claim 1, having a planetary gear set, **characterized in that** the lubricating device has an oil collecting channel (35) which is situated outside the oil sump (18) and which rotates with a planet carrier (9) and from which oil ducts (37) lead to lubricating bores (38, 39) in planet journals (7).

## Revendications

1. Boîte de vitesses comprenant un dispositif de lubrification, avec au moins un disque d'immersion (16) tournant autour d'un axe de rotation (3), qui est immergé dans un carter d'huile (18) du dispositif de lubrification qui est rempli d'huile de lubrification (17) et avec lequel, lors de la rotation autour de l'axe de rotation (3), de l'huile de lubrification (17) peut être distribuée, le disque d'immersion (16) présentant, dans la direction de la force centrifuge, au moins une rigole de déflexion (19), la rigole de déflexion (19) étant limitée par au moins un fond de rigole (20) situé radialement l'extérieur et par au moins une paroi latérale (21) orientée radialement vers l'intérieur depuis le fond de rigole (20), avec un bord (22), et le bord (22) étant en l'occurrence orienté radialement par rapport à l'axe de rotation (3) et en s'étendant autour de celui-ci, et la rigole de déflexion (19) présentant des ouvertures de sortie (23), et les ouvertures de sortie (23) étant en l'occurrence réalisées radialement plus à l'écart de l'axe de rotation (3) que le bord (22) et une partie de la rigole de déflexion (19) avec le bord (22) plongeant dans le carter d'huile (18), la boite de vitesses étant pourvue d'une surface d'impact (27) depuis laquelle des voies de guidage d'huile (31) conduisent jusqu'à au moins un point de palier (11, 14) de la boîte de vitesses, et vers laquelle est orienté au moins un jet d'huile (28) pouvant être produit par l'une des ouverture de sortie (23) ou une quantité de gouttes d'huile de lubrification (29) sortant de l'une des ouvertures de sortie (23), **caractérisée en ce qu'**au moins une portion (13) d'un boîtier de la boite de vitesses est pourvue de la surface d'impact (27) depuis laquelle les voies de guidage d'huile (31) conduisent jusqu'à au moins un point de palier (11), dans lequel l'arbre de rotor (10) d'un moteur électrique (30) peut être supporté.

2. Boîte de vitesses selon la revendication 1, **caractérisée en ce que** dans la rigole de déflexion (19) sont réalisés des renfoncements (24) au fond desquels est au moins à chaque fois réalisée une ouverture de sortie (23).

3. Boîte de vitesses selon la revendication 2, **caractérisée en ce qu'**au moins les renfoncements (24) présentent un volume d'huile de lubrification qui, pour une vitesse de rotation prédéterminée autour de l'axe de rotation (3), peut être rempli une fois par tour autour de l'axe de rotation (3) et pendant le même tour peut être vidé une fois par le biais de l'au moins une ouverture de sortie (23).

4. Boîte de vitesses selon la revendication 1, **caractérisée en ce que** les voies de guidage d'huile (31) sont formées par des nervures (32).

5. Boîte de vitesses selon la revendication 1, **caractérisée en ce que** dans le dispositif de lubrification, lors de la rotation du disque d'immersion (16) autour de l'axe de rotation (3), un flux d'huile de lubrification peut être produit, lequel présente de l'huile de lubrification (17) sortant du carter d'huile (18), extraite avec le disque d'immersion (16), pulvérisée contre la surface d'impact (27) par le biais des ouvertures de sortie (23) et de là acheminée par le biais des voies de guidage d'huile (31) à l'au moins un point de palier (11, 14).

6. Boîte de vitesses selon la revendication 1, **caractérisée en ce qu'**au moins un point de palier (14), vers lequel conduisent les voies de guidage d'huile depuis la surface d'impact, présente au moins un palier axial (15) de la boite de vitesses.

7. Boîte de vitesses selon la revendication 1, comprenant un engrenage planétaire, **caractérisée en ce que** le dispositif de lubrification présente une rigole de collecte d'huile (35) tournant avec un porte-satellites (9) à l'extérieur du carter d'huile (18), depuis laquelle des canaux d'huile (37) conduisent à des alésages de lubrification (38, 39) dans des boulons planétaires (7).
